# EUROPEAN PATENT APPLICATION

(11) **EP 4 769 605 A1**
(43) Date of publication of application: **01.07.2026**
(21) Application number: 25861100.3
(22) Date of filing: 20.08.2025
(51) Int. Cl.: H01M 10/04, H01M 50/463, H01M 50/249

(54) **BATTERY CELL PRODUCTION APPARATUS, BATTERY CELL PRODUCED USING SAME, AND BATTERY PACK AND VEHICLE COMPRISING BATTERY CELL**

(30) Priority: 26.08.2024 KR 20240114152
(71) Applicant: LG Energy Solution, Ltd., Seoul 07335 (KR)
(72) Inventor: RO, Ha-Ryn, Daejeon 34122 (KR); SONG, Hyeon-Min, Daejeon 34122 (KR)
(74) Representative: Goddar, Heinz J.
(86) International application number: PCT/KR2025/012657
(87) International publication number: WO 2026/049403

(57) **Abstract**

Disclosed are a battery cell production apparatus and a battery cell produced using the same, and a battery pack and a vehicle including the battery cell. A battery cell production apparatus according to an embodiment of the present disclosure is an apparatus for producing a battery cell using an electrode foil where a coating layer is formed, and includes an electrode forming unit forming an electrode using the electrode foil; a winding unit winding the electrode formed by the electrode forming unit into a jelly roll form; and a folding unit folding the electrode.

## Description

### TECHNICAL FIELD

This application is based on and claims priority from Korean Patent Application No. 10-2024-0114152, filed on August 26, 2024, with the Korean Intellectual Property Office, the disclosure of which is incorporated herein in its entirety by reference.

The present disclosure relates to a battery cell production apparatus and a battery cell produced using the same, and a battery pack and a vehicle including the battery cell, and more specifically, to a battery cell production apparatus capable of facilitating electrode folding and a battery cell produced using the same, and a battery pack and a vehicle including the battery cell.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like.

Depending on the shape of the battery case, a secondary battery may be classified into a cylindrical battery cell and a prismatic battery cell in which the electrode assembly is embedded in a cylindrical or prismatic metal can, and a pouch-type battery cell in which the electrode assembly is embedded in a pouch-type case made of an aluminum laminate sheet.

And, the electrode (positive electrode or negative electrode) of the secondary battery may include a coated portion where a coating layer is formed by compressing an electrode mixture on the surface of an electrode foil, and an uncoated portion where the coating layer is not formed.

A conventional cylindrical battery cell involves applying positive or negative active materials to an electrode, followed by slitting (cutting the electrode), and then pressing the end (e.g., the uncoated portion) of the slit electrode to bend it.

However, during the process of pressing the end of the slit electrode, the end of the slit electrode is excessively crumpled to cause damage the electrode, which has a problem of negative impact on the overall quality of the battery cell.

### DISCLOSURE

### Technical Problem

The present disclosure is designed to solve the above-described problems, and therefore the present disclosure is directed to providing a battery cell production apparatus capable of facilitating electrode folding by forming preset lines on the electrode and a battery cell produced using the same, and a battery pack and a vehicle including the battery cell.

Additionally, the present disclosure is directed to providing a battery cell production apparatus capable of preventing electrode damage during electrode folding and thus improving the quality of the battery cell and a battery cell produced using the same, and a battery pack and a vehicle including the battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided a battery cell production apparatus, which is an apparatus for producing a battery cell using an electrode foil where a coating layer is formed, including an electrode forming unit forming an electrode using the electrode foil; a winding unit winding the electrode formed by the electrode forming unit into a jelly roll form; and a folding unit folding the electrode.

In an embodiment, the electrode forming unit may include a transfer member transferring the electrode foil; and a folding line forming member forming a folding line on the electrode foil transferred by the transfer member.

In an embodiment, the folding line forming member may be configured to press the electrode foil.

In an embodiment, the folding line forming member may include a pressure portion contacting the electrode foil to form a folding line on the electrode foil; and a support portion coupled to the pressure portion to support the pressure portion.

In an embodiment, the pressure portion may be formed such that the cross-sectional area thereof decreases toward one end.

In an embodiment, the pressure portion may have one end formed to be pointed.

In an embodiment, the electrode may include a coated portion where the coating layer is formed on the surface thereof and an uncoated portion where the coating layer is not formed, and the folding line forming member may form the folding line on the uncoated portion.

In an embodiment, the pressure portions may be provided in a pair, and a pair of the pressure portions may each be disposed on both sides of the electrode foil.

In an embodiment, the battery cell production apparatus may include a folding line re-pressure member spaced apart from the winding unit and pressing the folding line again along the folding line.

In an embodiment, the folding line re-pressure member may press the folding line again while the winding unit winds the electrode and separator into a jelly roll-shaped electrode assembly.

In an embodiment, the folding unit may fold the electrode along the folding line.

In an embodiment, the folding unit may include a plurality of unit press portions, and the plurality of unit press portions may press the electrode while moving from the outer side of the jelly roll-shaped electrode toward the center.

In an embodiment, the plurality of unit press portions may press the electrode simultaneously or sequentially.

In an embodiment, the plurality of unit press portions may have the same shape and size, and may press the electrode at the same speed.

Meanwhile, according to another aspect of the present disclosure, there may be provided a battery cell produced using the battery cell production apparatus described above, there may also be provided a battery pack including at least one battery cell described above, and there may also be provided a vehicle including at least one battery cell described above.

### Advantageous Effects

The embodiments of the present disclosure have an effect of facilitating electrode folding by forming preset lines on the electrode.

Additionally, there is an effect of preventing electrode damage during electrode folding and thus improving the quality of battery cell.

However, the effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is schematic perspective view of an electrode forming unit in a battery cell production apparatus according to an embodiment of the present disclosure.
FIG. 2 is a plan view showing a state in which folding lines are formed on an electrode foil by the electrode forming unit in FIG. 1.
FIG. 3 is a view of part A in FIG. 2, as seen along the arrow.
FIG. 4(a) is a view illustrating a folding line forming member in a battery cell production apparatus according to an embodiment of the present disclosure, and FIG. 4(b) is a view illustrating a folding line forming member according to a modified embodiment.
FIG. 5 is a schematic perspective view showing a state in which an electrode is wound into a jelly roll form by a winding unit in a battery cell production apparatus according to an embodiment of the present disclosure.
FIG. 6 is a plan view of a folding unit before folding the electrode in a battery cell production apparatus according to an embodiment of the present disclosure.
FIG. 7 is a plan view of a folding unit after folding the electrode in a battery cell production apparatus according to an embodiment of the present disclosure.
FIG. 8 is a side cross-sectional view showing a state in which a folding unit moves toward an electrode to fold the electrode in a battery cell production apparatus according to an embodiment of the present disclosure.
FIG. 9 is a side cross-sectional view showing a state in which the folding unit folds the electrode in FIG. 8.
FIG. 10 is a side cross-sectional view showing a state in which the folding unit is separated from the electrode after folding the electrode in FIG. 9.
FIG. 11 is a view schematically showing the configuration of a battery pack including battery cells produced using a battery cell production apparatus according to each embodiment of the present disclosure.
FIG. 12 is a view for describing a vehicle including a battery pack of FIG. 11.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

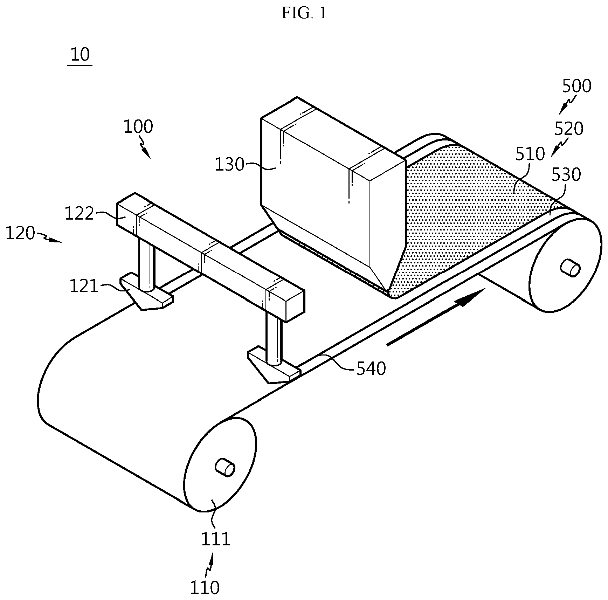

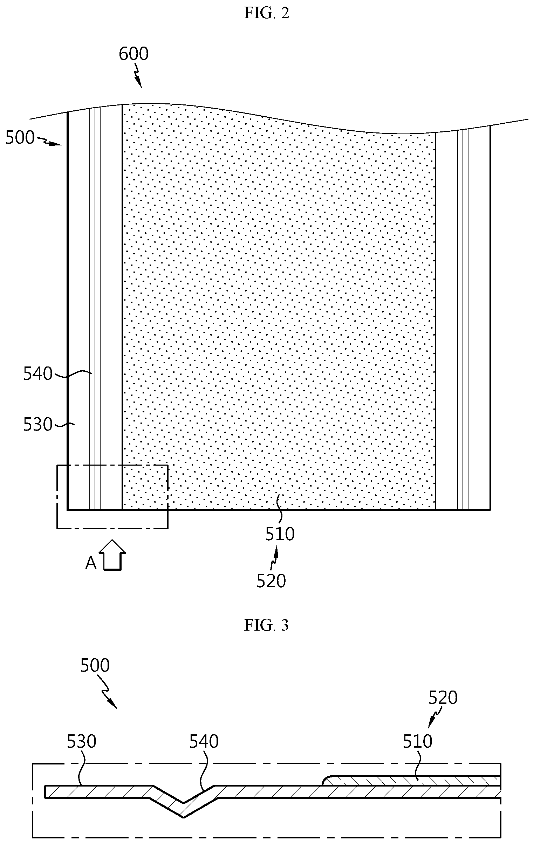

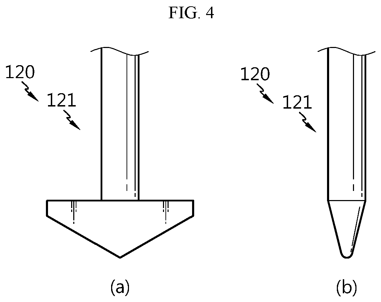

FIG. 1 is schematic perspective view of an electrode forming unit in a battery cell production apparatus according to an embodiment of the present disclosure, FIG. 2 is a plan view showing a state in which folding lines are formed on an electrode foil by the electrode forming unit in FIG. 1, FIG. 3 is a view of part A in FIG. 2, as seen along the arrow, FIG. 4(a) is a view illustrating a folding line forming member in a battery cell production apparatus according to an embodiment of the present disclosure, and FIG. 4(b) is a view illustrating a folding line forming member according to a modified embodiment.

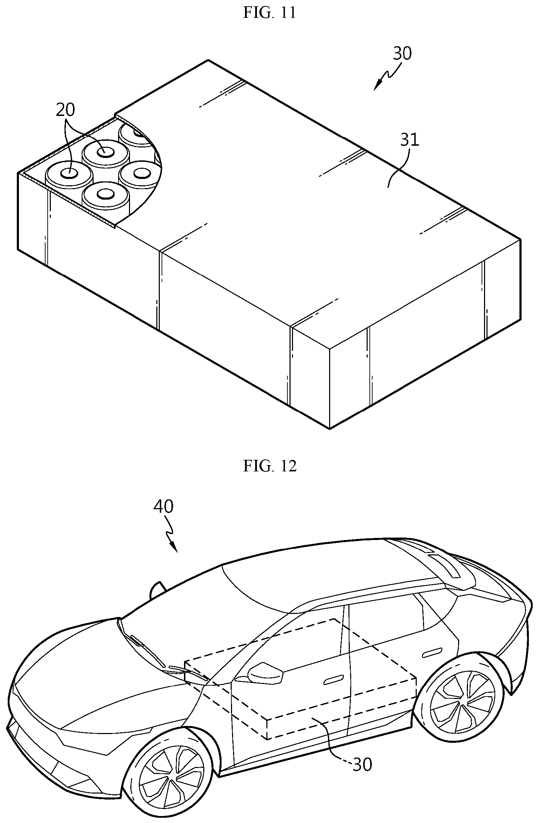

Referring to the drawings, a battery cell production apparatus 10 according to an embodiment of the present disclosure produces an electrode 600 (see FIG. 2, a positive electrode or a negative electrode) using an electrode foil 500 where a coating layer 510 is formed, and produces a battery cell 20 (see FIG. 11) using the electrode 600. Here, the electrode 600 is a concept including both a wet electrode and a dry electrode.

For example, the wet electrode is manufactured through a process of applying an electrode mixture in a slurry state including a solvent to the surface of an electrode substrate such as the electrode foil 500 to form a coating layer 510 and drying the coating layer 510.

And, the dry electrode is manufactured through a process of compressing an electrode mixture in a powder (powder mixture) state that does not include a solvent onto the surface of the electrode foil 500 to form a coating layer 510. That is, the electrode mixture is mixed without a liquid medium such as a solvent or dispersion medium, and then the electrode mixture in a powder state is manufactured by compressing while passing it through a rolling roll.

Referring to FIGS. 1 and 2, the electrode forming unit 100 is configured to form an electrode 600 using an electrode foil 500. The electrode forming unit 100 may include a transfer member 110 and a folding line forming member 120. And, the electrode forming unit 100 may include various types of coating forming members 130 forming a coating layer 510 on the electrode foil 500.

The transfer member 110 transfers the electrode foil 500. The transfer member 110 may be various, and for example, may include a plurality of rollers 111 to transfer the electrode foil 500 in a roll-to-roll method. The transfer member 110 is not limited thereto, but hereinafter, an embodiment in which the transfer member 110 includes a plurality of rollers 111 will be described for convenience of description. And, the arrow in FIG. 1 indicates the transfer direction of the electrode foil 500.

For example, when the plurality of rollers 111 rotate, the electrode foil 500 moves in the direction of the arrow in FIG. 1.

The coating forming member 130 is configured to form a coating layer 510 on the electrode foil 500. The surface of the electrode foil 500 may be coated with an electrode active material by the coating forming member 130. Referring to FIG. 2, the electrode foil 500 may include a coated portion 520 where the coating layer 510 of an electrode active material is formed on the surface thereof and an uncoated portion 530 (e.g., both ends of the electrode foil 500) where the coating layer 510 of the electrode active material is not formed.

Referring to FIG. 1, the folding line forming member 120 is configured to form a folding line 540 on the electrode foil 500 transferred by the transfer member 110.

A method in which the folding line forming member 120 forms the folding line 540 on the electrode foil 500 may be various, and for example, as shown in FIG. 1, the folding line forming member 120 may be configured to press the electrode foil 500.

The folding line forming member 120 may be configured in various ways, and for example, may be configured to include a pressure portion 121 and a support portion 122.

The pressure portion 121 contacts the electrode foil 500 and presses the electrode foil 500 at a preset pressure, thereby forming the folding line 540 on the electrode foil 500, as shown in FIG. 3. The pressure portion 121 may be disposed at various positions, and for example, may be disposed to press the upper side of the electrode foil 500.

In this way, when the pressure portion 121 presses the upper side of the electrode foil 500, the electrode foil 500 may be formed in a shape of being pressed downward based on FIG. 3, as shown in FIG. 3.

The pressure portion 121 may press the electrode foil 500 while the electrode foil 500 is transferred by the plurality of rollers 111 of the transfer member 110. And, the pressure portion 121 may be disposed either at the front or rear of the coating forming member 130 based on the transfer direction of the electrode foil 500.

Referring to FIG. 4(a), the pressure portion 121 may be formed such that the cross-sectional area thereof decreases toward one end. In FIG. 4(a), the lower end of the pressure portion 121 may be formed to be pointed. Alternatively, referring to FIG. 4(b) as a modified embodiment, the lower end of the pressure portion 121 may be formed to be rounded. However, the shape of the pressure portion 121 is not limited thereto.

The pressure portion 121 may be provided in a pair. In this case, a pair of pressure portions 121 may each be disposed on both sides of the electrode foil 500. And, the pressure portion 121 may press the uncoated portion 530 of the electrode 600 (or electrode foil 500) to form the folding line 540 on the uncoated portion 530.

The support portion 122 is coupled to the pressure portion 121 to support the pressure portion 121. When the pressure portions 121 are provided in a pair, a pair of pressure portions 121 may each be coupled to both sides of the support portion 122.

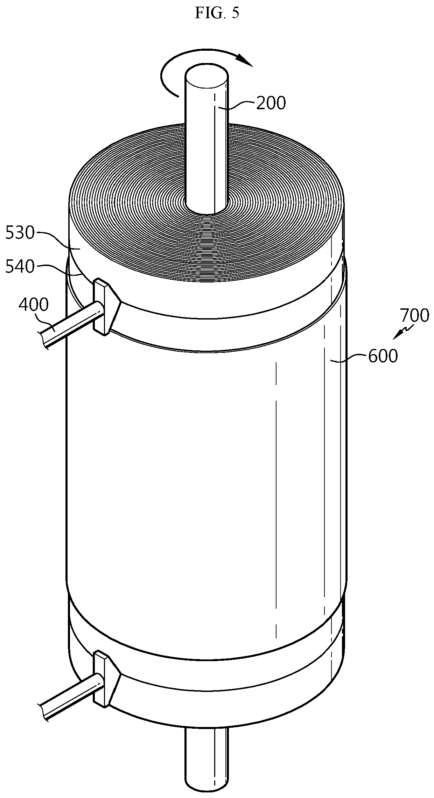

FIG. 5 is a schematic perspective view showing a state in which an electrode is wound into a jelly roll form by a winding unit in a battery cell production apparatus according to an embodiment of the present disclosure.

Referring to FIG. 5, the winding unit 200 forms an electrode assembly 700 by winding the electrode 600 formed by the electrode forming unit 100 into a jelly roll form. The electrode assembly 700 may have a jelly roll form in which a positive electrode plate, a negative electrode plate, and a separator interposed between the positive electrode plate and the negative electrode plate are wound in one direction.

The winding unit 200 may be various, and for example, may be formed in a rod shape, as shown in FIG. 5. However, the winding unit 200 is not limited to a rod shape, but for convenience of description, the following description will focus on the case where the winding unit 200 is in a rod shape.

The winding unit 200 is inserted into the central hole of the electrode assembly 700 and wind the electrode assembly 700 while rotating. Here, when the winding unit 200 and the electrode assembly 700 rotate, a folding line re-pressure member 400 may be provided to press the folding line 540 formed by the folding line forming member 120 once more.

Referring to FIG. 5, the folding line re-pressure member 400 is spaced apart from the winding unit 200 and presses the folding line 540 again along the folding line 540. Accordingly, the folding line 540 may be formed more clearly.

That is, the folding line re-pressure member 400 presses the folding line 540 again while the winding unit 200 winds the electrode 600 and separator into a jelly roll-shaped electrode assembly 700.

However, the folding line re-pressure member 400 is not necessarily required to be provided, and may be selectively provided as needed.

Since the folding line re-pressure member 400 has a similar configuration to the folding line forming member 120, the description of the folding line re-pressure member 400 is replaced by the description of the folding line forming member 120 described above.

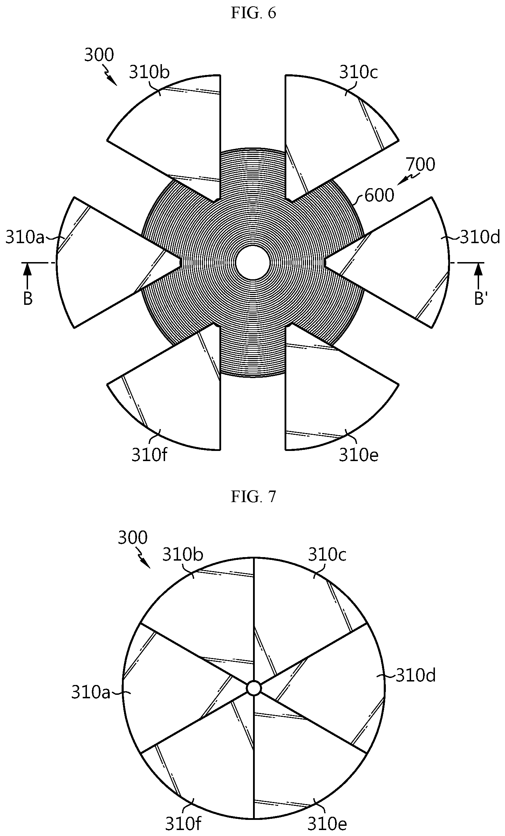

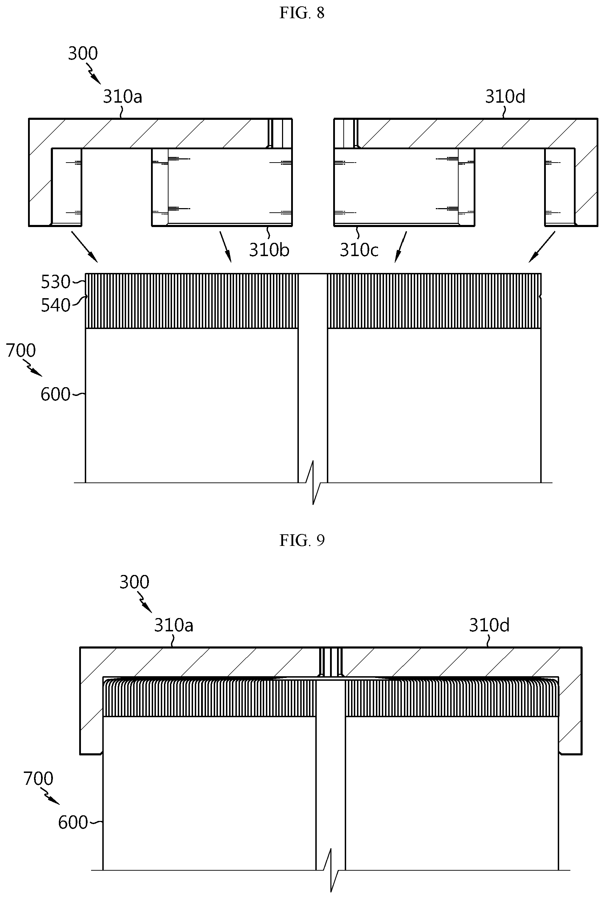

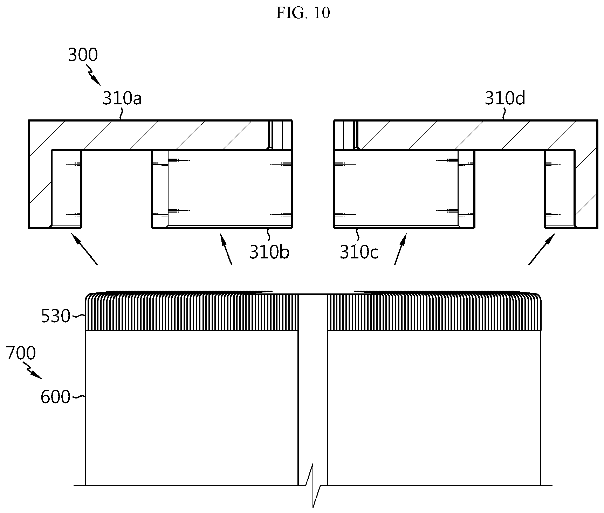

FIG. 6 is a plan view of a folding unit before folding the electrode in a battery cell production apparatus according to an embodiment of the present disclosure, FIG. 7 is a plan view of a folding unit after folding the electrode in a battery cell production apparatus according to an embodiment of the present disclosure, FIG. 8 is a side cross-sectional view showing a state in which a folding unit moves toward an electrode to fold the electrode in a battery cell production apparatus according to an embodiment of the present disclosure, FIG. 9 is a side cross-sectional view showing a state in which the folding unit folds the electrode in FIG. 8, and FIG. 10 is a side cross-sectional view showing a state in which the folding unit is separated from the electrode after folding the electrode in FIG. 9.

Referring to FIGS. 6 and 7, the folding unit 300 folds the electrode 600. That is, the folding unit 300 presses and folds the electrode 600 so that the electrode 600 is folded along the folding line 540 formed on the electrode 600 by the folding line forming member 120.

A plurality of unit press portions 310a, 310b, 310c, 310d, 310e, 310f may be provided in the folding unit 300. And, as shown in FIGS. 6 and 7, the plurality of unit press portions 310a, 310b, 310c, 310d, 310e, 310f may be configured to press the electrode 600 while moving from the outer side of the jelly roll-shaped electrode 600 toward the center.

FIG. 8 is a cross-sectional view taken along line B-B' of FIG. 6. Referring to FIG. 8, the plurality of unit press portions 310a, 310b, 310c, 310d press the electrode 600 so that the electrode 600 is folded along the folding line 540 of the electrode 600 while moving obliquely from the upper side to the lower side toward the center of the electrode 600.

However, the present disclosure is not limited thereto, and the plurality of unit press portions 310a, 310b, 310c, 310d, 310e, 310f may be positioned at the same height as the folding line 540 rather than being positioned at the upper side and may be configured to move toward the center of the electrode 600 along the horizontal direction.

Referring to FIG. 9, a plurality of unit press portions 310a, 310b, 310c, 310d press the folding line 540 of the electrode 600, so that the electrode 600 is folded. In this way, when the plurality of unit press portions 310 press the folding line 540 formed on the electrode 600 while moving from the outer side of the electrode 600 toward the center and, the electrode 600 may be folded uniformly, thereby preventing damage to the electrode 600 due to tearing or uneven folding of the uncoated portion 530.

Referring to FIG. 10, the plurality of unit press portions 310a, 310b, 310c, 310d are separated from the electrode 600 after completing the folding of the electrode 600.

The plurality of unit press portions 310a, 310b, 310c, 310d, 310e, 310f may press the electrode 600 in various ways. For example, the plurality of unit press portions 310a, 310b, 310c, 310d, 310e, 310f may press the electrode 600 simultaneously or sequentially. Alternatively, the plurality of unit press portions 310a, 310b, 310c, 310d, 310e, 310f may have the same shape and size, and may press the electrode 600 at the same speed. However, the pressing method of the plurality of unit press portions 310a, 310b, 310c, 310d, 310e, 310f is not limited thereto.

Meanwhile, in FIGS. 6 and 7, the plurality of unit press portions 310a, 310b, 310c, 310d, 310e, 310f are composed of six units, but the present disclosure is not limited thereto, and the number of unit press portions 310a, 310b, 310c, 310d, 310e, 310f may vary.

FIG. 11 is a view schematically showing the configuration of a battery pack including battery cells 20 produced using a battery cell production apparatus 10 according to each embodiment of the present disclosure.

Referring to FIG. 11, a battery pack 30 according to an embodiment of the present disclosure may include one or more battery cells 20. Here, the battery cell 20 is produced using the battery cell production apparatus 10 according to each embodiment of the present disclosure as described above.

Additionally, the battery pack 30 may further include a pack housing 31 for accommodating the battery cell 20 and various devices for controlling the charging and discharging of the battery cell 20, such as a BMS, a current sensor, a fuse, and the like.

FIG. 12 is a view for describing a vehicle including a battery pack of FIG. 11.

Referring to FIG. 12, a vehicle 40 according to an embodiment of the present disclosure may include one or more battery cells 20 produced using the battery cell production apparatus 10 according to each embodiment of the present disclosure or the battery pack 30. Here, the vehicle 40 includes various types of vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

While the present disclosure has been described hereinabove with reference to a limited number of embodiments and drawings, the present disclosure is not limited thereto and it is obvious to those having ordinary skill in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to a battery cell production apparatus and a battery cell produced using the same, and a battery pack and a vehicle including the battery cell, and is particularly applicable to industries related to secondary batteries.

## Claims

1. A battery cell production apparatus for producing a battery cell using an electrode foil where a coating layer is formed, the battery cell production apparatus comprising:
an electrode forming unit forming an electrode using the electrode foil;
a winding unit winding the electrode formed by the electrode forming unit into a jelly roll form; and
a folding unit folding the electrode.

2. The battery cell production apparatus according to claim 1,
wherein the electrode forming unit comprises:
a transfer member transferring the electrode foil; and
a folding line forming member forming a folding line on the electrode foil transferred by the transfer member.

3. The battery cell production apparatus according to claim 2,
wherein the folding line forming member is configured to press the electrode foil.

4. The battery cell production apparatus according to claim 3,
wherein the folding line forming member comprises:
a pressure portion contacting the electrode foil to form a folding line on the electrode foil; and
a support portion coupled to the pressure portion to support the pressure portion.

5. The battery cell production apparatus according to claim 4,
wherein the pressure portion is formed such that the cross-sectional area thereof decreases toward one end.

6. The battery cell production apparatus according to claim 5,
wherein the pressure portion has one end formed to be pointed.

7. The battery cell production apparatus according to claim 2,
wherein the electrode comprises a coated portion where the coating layer is formed on the surface thereof and an uncoated portion where the coating layer is not formed, and
wherein the folding line forming member forms the folding line on the uncoated portion.

8. The battery cell production apparatus according to claim 4,
wherein the pressure portions are provided in a pair, and
wherein a pair of the pressure portions are each disposed on both sides of the electrode foil.

9. The battery cell production apparatus according to claim 3, comprising:
a folding line re-pressure member spaced apart from the winding unit and pressing the folding line again along the folding line.

10. The battery cell production apparatus according to claim 9,
wherein the folding line re-pressure member presses the folding line again while the winding unit winds the electrode and separator into a jelly roll-shaped electrode assembly.

11. The battery cell production apparatus according to claim 2,
wherein the folding unit folds the electrode along the folding line.

12. The battery cell production apparatus according to claim 11,
wherein the folding unit comprises a plurality of unit press portions, and
wherein the plurality of unit press portions press the electrode while moving from the outer side of the jelly roll-shaped electrode toward the center.

13. The battery cell production apparatus according to claim 12,
wherein the plurality of unit press portions press the electrode simultaneously or sequentially.

14. The battery cell production apparatus according to claim 12,
wherein the plurality of unit press portions have the same shape and size, and press the electrode at the same speed.

15. A battery cell produced using a battery cell production apparatus according to any one of claims 1 to 14.

16. A battery pack comprising at least one battery cell according to claim 15.

17. A vehicle comprising at least one battery cell according to claim 15.
